# EUROPÄISCHE PATENTANMELDUNG

(11) **EP 2 226 218 A1**
(43) Veröffentlichungstag der Anmeldung: **08.09.2010**
(21) Anmeldenummer: 10001927.2
(22) Anmeldetag: 25.02.2010
(51) Int. Cl.: B60R 5/00, B60N 2/46

(54) **Vorrichtung zur Nutzung des Raums in einer Fahrzeugwand**

(30) Priorität: 03.03.2009 DE 202009003600 U
(71) Anmelder: Dr. Haubitz GmbH & Co. KG, 42699 Solingen (DE)
(72) Erfinder: Schirmer, Werner, 42719 Solingen (DE); Zinsser, Bernhard, 42327 Wuppertal (DE)
(74) Vertreter: Priebisch, Rüdiger

(57) **Zusammenfassung**

Vorrichtung (1) zur Nutzung des Raums (9) in einer Fahrzeugwand (2), wobei der Raum (9) durch eine kanalartige Durchgangsöffnung (6) gebildet ist, die vorne von einer schwenkbaren Fahrgastraumklappe (7) oder Armlehne und hinten von einer schwenkbaren Laderaumklappe (8) verschließbar ist und dabei Gegenstände aufnehmen kann.

Um den Raum (9) auch anstatt zum Durchladen von sperrigen Gütern zur Aufnahme von kleinen Gebrauchsgegenständen nutzen zu können, wird vorgeschlagen, dass vor der Laderaumklappe (8) zumindest eine Zwischenwand (10; 10') angeordnet ist, die den unteren Bereich des lichten Querschnitts der Durchgangsöffnung (6) bis in einer Höhe von einem Drittel bis zu zwei Dritteln abdeckt und die, den übrigen lichten Querschnitt der Durchgangsöffnung (6) freigebend, schwenkbar an der Fahrzeugwand (2) befestigt ist.

## Beschreibung

Die Erfindung bezieht sich auf eine Vorrichtung zur Nutzung des Raums in einer Fahrzeugwand, wie sie in der Präambel des Patentanspruchs 1 näher umrissen ist.

Derartige Räume sind bekannt als sogenannte Durchladeöffnungen. Diese verbinden rohrartig einen hinteren Laderaum mit einem vorderen Fahrgastraum und dienen zur Aufnahme von langen und sperrigen Transportgütern, wie z. B. Skiern. Solche Skier werden z. B. in einem Skisack gelagert, der laderaumseitig an der Fahrzeugwand befestigt ist und sich durch die kanalartige Durchladeöffnung bis in den Fahrgastraum hinein erstreckt. Eine prinzipielle Anordnung zeigt die DE 1 849 156 U. Dort ist die Durchladeöffnung im Bereich einer mittleren, aus der Rückenlehne abklappbaren Armlehne angeordnet.

Bei Nichtgebrauch des Skisacks kann dieser in kompakt zusammengelegter Form innerhalb der Durchladeöffnung gelagert sein. Zum diesbezüglichen Stand der Technik wird verwiesen auf DE 20 2008 005 824 U1 der Anmelderin. Dort ist ein solcher zusammenlegbarer Skisack offenbart. Des weiteren zeigt die DE 20 2008 002 122 U1 der Anmelderin eine besondere Befestigung eines Skisacks in der Durchladeöffnung einer Fahrzeugwand.

Aus der DE 296 15 813 U1 ist eine Armlehne bekannt, wie sie vorstehend zum Stand der Technik beschrieben ist. Die Armlehne umfasst im Einzelnen einen zwischen einer aufrechten Position und einer herabgeschwenkten Position in einer Schwenkebene schwenkbaren Armlehnenkörper, der einen Innenraum zur Aufnahme eines Ausstattungsteils und einen in derselben Schwenkebene schwenkbaren Halterahmen zur Halterung des Ausstattungsteils, wie Skisack oder dergleichen, bildet, wobei die in seiner herabgeschwenkten Position obere Breitseite des Armlehnenkörpers zum Innenraum hin offen und mittels eines oberen Deckels verschließbar ist und der Armlehnenkörper selbst den Halterahmen zur Aufnahme des Ausstattungsteils, wie eines zusammengelegten Skisacks, bildet. Außer der Nutzung zur Durchladung in der Offenstellung wird auf die Nutzung des Halterahmens als Becherhalter, zur Aufnahme eines sackartigen Abfallbehälters oder eines Mobiltelefons hingewiesen. Irgend ein Hinweis auf die Anordnung einer zusätzlichen Zwischenwand fehlt jedoch.

Aus der DE 197 11 648 C1 ist eine mehrsitzige Sitzbank für Fahrzeuge bekannt. Diese umfasst einen ein Sitzpolster aufweisenden Sitzteil, eine ein Lehnenpolster aufweisende Rückenlehne und eine zwischen zwei Sitzplätzen angeordnete, klappbare Armlehne, die aus einer Gebrauchsstellung, in der sie zur Armauflage etwa horizontal von der Rückenlehne vorspringt und eine Aufnahmemöglichkeit für Gegenstände anbietet, in eine Nichtgebrauchsstellung, in der sie in einer Polsterausnehmung im Lehnenpolster einliegt, und umgekehrt schwenkbar ist. Zur Aufnahme für Gegenstände ist eine Einstecktasche angeordnet, die in der Tiefe der Polsterausnehmung für die Armlehne und oben offen ausgebildet ist und zumindest im leeren Zustand das Einschwenken der Armlehne nicht behindert. Die Taschenvorderseite kann als Netz ausgebildet sein. Irgend ein Hinweis auf die Möglichkeit für eine Durchladung fehlt jedoch.

Aus der DE 101 57 526 A1 ist die Anordnung einer Netzeinheit vor der Öffnung eines Staufachs bekannt, insbesondere für die seitliche Kofferraumverkleidung eines Kraftfahrzeugs. Die Netzeinheit soll eine obere Netzstange, an der Maschen des Netzes befestigt sind, sowie zwei einander gegenüberliegende seitliche Stangenführungen für die Netzstange umfassen. Des weiteren ist mit der Netzstange mindestens ein elastisches Zugmittel verbunden, das die Netzstange mit den daran angebrachten Maschen des Netzes aus einer unteren Position in eine obere Position bewegen kann. Irgend ein Hinweis auf eine eingangs erläuterte Durchladung fehlt.

Die Durchladeöffnung ist bei Nichtbenutzung hinten üblicherweise durch eine insbesondere abklappbare Laderaumklappe verschlossen und vorne von einer in die Rückenlehne eingeklappten Armlehne, wie oben schon erläutert. Die Durchladeöffnung kann auch im Bereich einer Rückenlehne z. B. eines mittleren Sitzes angeordnet sein. Dann dient vorne zum Verschließen, anstelle einer Armlehne, ein entsprechend großer Bereich der Rückenlehne in Form einer Fahrgastraumklappe, die bei Bedarf, zum sog. Durchladen, herunter geklappt werden kann.

Die besagte kanalartige Durchladeöffnung dient als Laderaum, z. B. zur Aufnahme eines gefüllten Skisacks, bildet jedoch ansonsten einen nutzlosen Hohlraum. Allerdings kann dieser durch Aufnahme eines kompakt zusammen gelegten Skisacks, wie oben zum Stand der Technik erläutert, schon zum Teil genutzt werden. Je nach Größe der kanalartigen Durchladeöffnung verbleibt jedoch selbst dann ein mehr oder weniger großer, ungenutzter Hohlraum. Hier setzt die Erfindung an.

Ausgehend von den geschilderten Gegebenheiten liegt der Erfindung das Bestreben zu Grunde, das ohnehin vorhandene Volumen der kanalartigen Durchladeöffnung bei einer Nichtnutzung als Durchladeraum zu anderen Zwecken zu nutzen.

Hierzu schlägt die Erfindung zunächst vor, dass vor der Laderaumklappe zumindest eine Zwischenwand angeordnet ist, die den unteren Bereich der lichten Durchgangsöffnung bis in einer Höhe von einem Drittel bis zu zwei Dritteln abdeckt und die, den übrigen lichten Querschnitt der Durchgangsöffnung freigebend, schwenkbar an der Fahrzeugwand befestigt ist.

In den verbleibenden Hohlraum wird somit eine schwenkbewegliche Zwischenwand angeordnet, die einen oberen Bereich der lichten Durchgangsöffnung frei lässt, um in dem dahinter befindlichen Hohlraum kleine Gebrauchsgegenstände nahezu beliebiger Art verstauen zu können, die somit im Fahrzeug klapperfrei untergebracht, aber leicht zugänglich sind. Solche kleinen Gegenstände sind nur beispielhaft Getränkedosen, Zigarettenschachteln, Taschentücher, Kartenmaterial usw., aber auch kleine elektrische Geräte zur Unterhaltung, zum Spielen oder zu sonstigen Zwecken, wie DVDs, CDs, CD-Player.

Als Zwischenwand ist hier prinzipiell eine flächige Anordnung von vielfältiger Art zu verstehen, wie weiter unten noch erläutert werden wird. Die erfindungsgemäße Vorrichtung nutzt somit ansonst ungenutzten Hohlraum eines Fahrzeugs zur sicheren Unterbringung von kleinen Gebrauchsgegenständen, die für die Fahrgäste bequem zugänglich sind, und schließt damit aus, dass diese im Falle einer abrupten Abbremsung oder eines Unfalls des Fahrzeugs durch umherfliegende Gegenstände gefährdet werden.

Je nachdem, wie tief der vorhandene oder verbliebene Hohlraum ist, wird die Anordnung, Ausbildung und Höhe der Zwischenwand gewählt. Bei relativ kleinem Hohlraum ist die Zwischenwand entweder nahe oder an der Laderaumklappe selbst befestigt und zusammen oder parallel zu dieser schwenkbar. Dann kann z. B. eine steife Zwischenwand mit der Laderaumklappe einen schmalen Schacht bilden, der z. B. zur Aufnahme von Kartenmaterial dienen kann. Eine elastische Zwischenwand z. B. Form eines Netzes, kann sogar an der Laderaumklappe parallel anliegen. Durch ihre elastische Ausbildung entsteht oder vergrößert sich jedoch ein Zwischenraum, in den dann ein Gegenstand zwischen die elastische oder auch elastisch gelagerte Zwischenwand und die Laderaumklappe geklemmt wird. Wenn jedoch die Durchgangsöffnung als sogenannte Durchladeöffnung genutzt werden soll, dann kann die Zwischenwand zusammen mit der Laderaumklappe oder parallel hierzu abgeschwenkt werden, so dass sie den lichten Querschnitt völlig frei gibt und beim Durchladevorgang keineswegs stört.

Bei relativ großem, tiefem Hohlraum kann die Zwischenwand als separates und parallel zu der Fahrgastraumklappe schwenkbares Teil ausgebildet sein. Es ergibt sich dann ein relativ großer, zusätzlicher und zu vielfältigen Zwecken nutzbarer Stauraum. Zum Durchladen wird die Zwischenwand wie die Fahrgastraumklappe verschwenkt und macht den gesamten lichten Querschnitt zur Nutzung frei.

In beiden geschilderten Ausführungen kann die Zwischenwand zumindest zum Teil, aber auch nahezu ganz, dehnbar ausgebildet sein. Hierdurch können Gegenstände beliebiger Raumform durch Einklemmen klapperfrei untergebracht werden.

Eine besondere Ausbildung der Vorrichtung sieht vor, dass die Zwischenwand einen biegesteifen Tragrahmen umfasst, der über Gelenke unterhalb der Durchgangsöffnung schwenkbar gelagert und über insbesondere von Hand oder motorisch lösbare Befestigungsmittel in einer der Neigung der Fahrzeugwand entsprechenden Stellung seitlich der Durchgangsöffnung befestigbar ist. Diese Befestigung kann z. B. mit Hilfe von elastischen Klipsen erfolgen. Eine solche Zwischenwand kann zum Durchladen zusammen mit der Fahrgastraumklappe, z. B. von Hand oder motorisch, abgeklappt werden. Ein derartiger Tragrahmen kann insbesondere aus einem spritzgegossenen Kunststoffteil bestehen, an dem z. B. die genannten Klipse mit angespritzt sind.

Dann kann des weiteren vorgesehen sein, dass an dem Tragrahmen ein flexibles und / oder dehnbares flächiges Glied befestigt ist, das den überwiegenden Teil der Zwischenwand bildet. Hierzu kann das flächige, z. B. als elastisches Netz ausgebildete Glied z. B. mit Hilfe eines Spannrahmens am Tragrahmen befestigt sein. Hierzu kann wiederum der Spannrahmen, z. B. in Form eines Drahtes, seitlich in den Tragrahmen eingeklipst sein.

Außerdem kann der Tragrahmen eine U-Form aufweisen, deren Steg zur schwenkbaren Befestigung und deren beide Schenkel zur formschlüssigen, aber lösbaren Befestigung an der Fahrzeugwand dienen.

Während die lösbare Befestigung als elastische Klipse ausgebildet sein kann, kann die Zwischenwand zumindest überwiegend aus Stoff, Folie oder Netz bestehen, um die Biegsamkeit bzw. die Dehnung der Zwischenwand sicher zu stellen. Dabei kann eine gewünschte Elastizität entweder in der Zwischenwand selbst oder in ihrer Befestigung liegen.

Weitere Merkmale und Vorteile der Erfindung sind auch den beiden Ausführungsbeispielen entnehmbar, die anhand der Zeichnungen nun beschrieben werden.

Fig. 1 zeigt in schematischer Darstellung einen Längsschnitt durch eine Vorrichtung mit geschlossenen Klappen und strichpunktiert angedeutet mit offenen Klappen, und zwar mit zwei alternativen Ausführungen einer erfindungsgemäßen Zwischenwand.

Fig. 2 zeigt die Ansicht in Richtung des Pfeils S in Fig. 1, jedoch bei ganz geöffneter Fahrgastraumklappe und nur mit einer ersten Ausführung einer Zwischenwand.

Die Vorrichtung 1 umfaßt eine etwa 60° schräge Fahrzeugwand 2, die einen vorderen Fahrgastraum 3 von einem hinteren Laderaum 4 trennt. Ein Sitz 5 ist nur angedeutet. Die Fahrzeugwand 2 bildet hier gleichzeitig die Rückenlehne des Sitzes 5 und umfasst einen Abschnitt, in dem eine im Querschnitt etwa rechteckige Durchgangsöffnung 6 eingebracht ist. Die Durchgangsöffnung 6 ist vorne von einem Teil der Rückenlehne in Form einer nach vorne um eine Achse X1 - X1 auf den Sitz 5 zu verschwenkbaren Fahrgastraumklappe 7 verschlossen. Zum Laderaum 4 hin ist die Durchgangsöffnung 6 von einer nach hinten und unten, z. B. auf den Laderaumboden LB, um eine Achse X2 - X2 schwenkbaren Laderaumklappe 8 verschlossen. Zwischen den beiden Klappen 7 und 8 bildet die Durchgangsöffnung 6 einen geschlossenen Hohlraum 9, der genutzt werden soll.

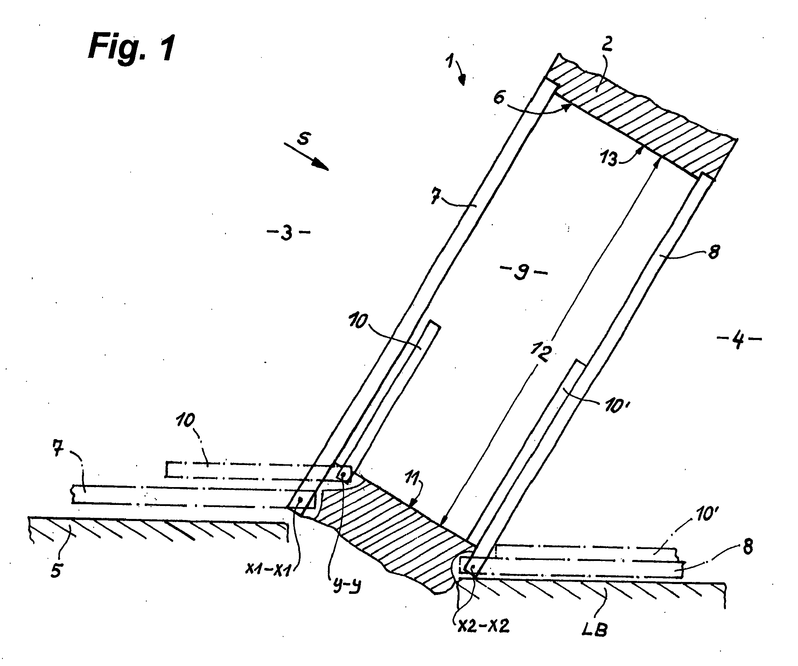

In Fig. 1 sind zwei unterschiedliche Ausführungen gleichzeitig dargestellt, die jedoch ansonsten getrennt voneinander benutzt werden. Die erste Ausführung ist bei Vorhandensein einer relativ tiefen Durchgangsöffnung 6 möglich. Hierzu ist vor der und mit möglichst großem Abstand zur Laderaumklappe 8, also unmittelbar hinter der Fahrgastraumklappe 7, eine Zwischenwand 10 befestigt. Die Zwischenwand 10 erstreckt sich etwa parallel zur Fahrgastraumklappe 7 und vom Boden 11 aus über die gesamte Breite der Durchgangsöffnung 6 und zwar gut ein Drittel ihrer gesamten Höhe 12, gemessen vom Boden 10 bis zur Decke 13 der kanalartigen Durchgangsöffnung 6. Die Zwischenwand 9 läßt somit gut die Hälfte des lichten Querschnitts der Durchgangsöffnung 6 frei, und zwar im oberen Bereich.

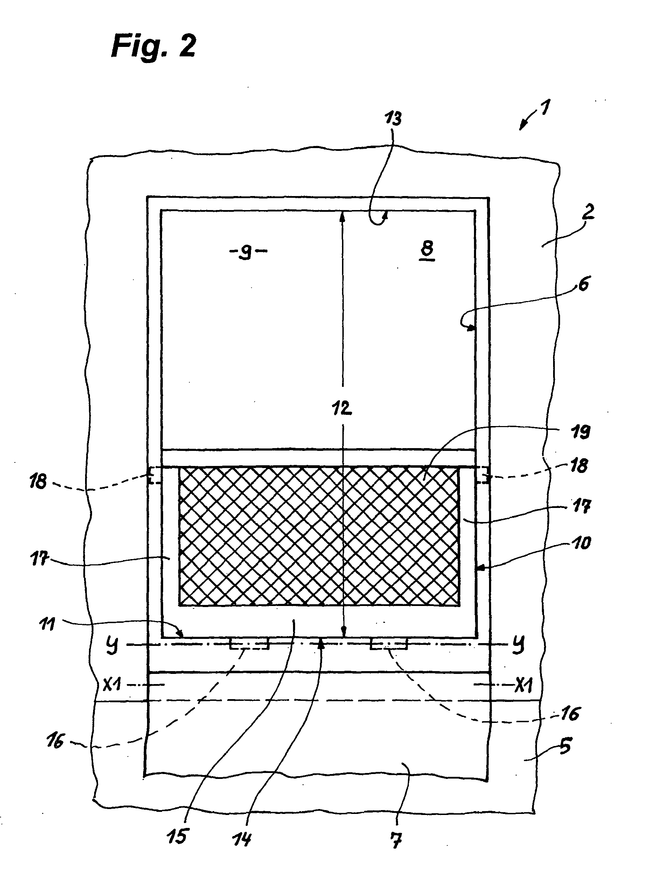

Die Zwischenwand 10 umfasst, vergl. Fig. 2, einen U-förmigen, biegesteifen Tragrahmen 14, der an seinem unteren Steg 15 Gelenke 16 aufweist, mit denen er, parallel zu der Fahrgastraumklappe 7, um eine unterhalb des Bodens 11 verlaufende Achse Y - Y nach vorne, etwa entgegen der Richtung des Pfeils S, verschwenkbar ist. Den beiden Schenkeln 17 des aus Kunststoff spritzgegossenen Tragrahmens 14 sind elastische Klipse 18 angeformt, mittels derer eine von Hand lösbare Befestigung an der Fahrzeugwand 2 herstellbar ist. Nach Lösen der Klipse 18 kann die Zwischenwand 10 nach vorne geschwenkt werden, wie in Fig. 2 dargestellt und in Fig. 1 strichpunktiert angedeutet.

Die Zwischenwand 10 besteht im übrigen flächenmäßig überwiegend aus einem elastischen Netz 19, das in den Tragrahmen 14 gespannt ist. Hierzu kann ein nicht dargestellter, ebenfalls U-förmiger Spannrahmen dienen, der in den Tragrahmen 14 eingeklipst wird.

Eine alternative Ausführung einer Zwischenwand 10 ist nur in Fig. 1 an der Laderaumklappe 8 dargestellt. Diese Zwischenwand 10' kommt zum Einsatz, wenn die Durchgangsöffnung 6 nur eine sehr geringe Tiefe hat, und kann zumindest ähnlich der ausführlich beschriebenen Zwischenwand 10 ausgebildet oder wie diese schwenkbar angeordnet sein. Hier ist sie jedoch unmittelbar mit ihrem U-förmigen Rahmen an der Laderaumklappe 8 befestigt, so dass sie zum Durchladen zusammen mit dieser, z. B. auf den Laderaumboden LB, um die Achse X2 - X2 verschwenkbar ist.

Während die Fahrzeugwand 10 starr, flexibel oder auch elastisch sein kann, ist die Fahrzeugwand 10' zumindest überwiegend elastisch ausgebildet, z. B. als Netz, oder aber alternativ mit einer dehnbaren Halterung versehen.

### Bezugszeichenliste

- 1: Vorrichtung
- 2: Fahrzeugwand
- 3: Fahrgastraum
- 4: Laderaum
- 5: Sitz
- 6: Durchgangsöffnung
- 7: Fahrgastraumklappe
- 8: Laderaumklappe
- 9: Hohlraum
- 10, 10': Zwischenwand
- 11: Boden
- 12: Höhe
- 13: Decke
- 14: Tragrahmen
- 15: Steg
- 16: Gelenk
- 17: Schenkel
- 18: Klips

- 19: Netz
- LB: Laderaumboden
- X1 - X1: Schwenkachse
- X2 - X2: Schwenkachse
- Y - Y: Schwenkachse
- S: Ansicht

## Patentansprüche

1. Vorrichtung (1) zur Nutzung des Raums (9) in einer zwischen einem vorderen Fahrgastraum (3) und einem hinteren Laderaum (4) angeordneten Fahrzeugwand (2), wobei der Raum (9) durch eine kanalartige Durchgangsöffnung (6) gebildet ist, die vorne von einer schwenkbaren Fahrgastraumklappe (7) oder Armlehne und hinten von einer schwenkbaren Laderaumklappe (8) verschließbar ist und dabei Gegenstände aufnehmen kann, **dadurch gekennzeichnet, dass** vor der Laderaumklappe (8) zumindest eine Zwischenwand (10; 10') angeordnet ist, die den unteren Bereich des lichten Querschnitts der Durchgangsöffnung (6) bis in einer Höhe von einem Drittel bis zu zwei Dritteln abdeckt und die, den übrigen lichten Querschnitt der Durchgangsöffnung (6) freigebend, schwenkbar an der Fahrzeugwand (2) befestigt ist.

2. Vorrichtung nach Anspruch 1, **dadurch gekennzeichnet, dass** die Zwischenwand (10') nahe oder an der Laderaumklappe (8) befestigt und zusammen mit oder parallel zu dieser schwenkbar befestigt ist.

3. Vorrichtung nach Anspruch 1, **dadurch gekennzeichnet, dass** die Zwischenwand (10) als separates und parallel zu der Fahrgastraumklappe (7) schwenkbares Teil ausgebildet ist.

4. Vorrichtung nach einem der Ansprüche 1 bis 3, **dadurch gekennzeichnet, dass** die Zwischenwand (10) zumindest zum Teil dehnbar ausgebildet ist.

5. Vorrichtung nach einem der Ansprüche 1 bis 4, **dadurch gekennzeichnet, dass** die Zwischenwand (10) einen biegesteifen Tragrahmen (14) umfasst, der über Gelenke (16) am oder im Boden (11) der Durchgangsöffnung (6) schwenkbar gelagert und über von Hand lösbare Befestigungsmittel (18) in einer der Neigung der Fahrzeugwand (2) entsprechenden Stellung seitlich der Durchgangsöffnung (6) befestigbar ist.

6. Vorrichtung nach Anspruch 5, **dadurch gekennzeichnet, dass** der Tragrahmen (14) aus einem spritzgegossenen Kunststoffteil besteht.

7. Vorrichtung nach Anspruch 5 oder 6, **dadurch gekennzeichnet, dass** an dem Tragrahmen (14) ein flexibles und / oder dehnbares flächiges Glied (19) befestigt ist, das den überwiegenden Teil der Zwischenwand (10) bildet.

8. Vorrichtung nach Anspruch 7, **dadurch gekennzeichnet, dass** der Tragrahmen (14) eine U-Form aufweist, deren Steg (15) zur schwenkbaren Befestigung und deren beide Schenkel (17) zur von Hand lösbaren Befestigung an der Fahrzeugwand (2) dienen.

9. Vorrichtung nach Anspruch 8, **dadurch gekennzeichnet, dass** die lösbare Befestigung als elastische Klipse (18) ausgebildet ist.

10. Vorrichtung nach einem der Ansprüche 1 bis 9, **dadurch gekennzeichnet, dass** die Zwischenwand (10; 10') zumindest überwiegend aus Stoff, Folie oder Netz besteht.

## Geänderte Patentansprüche

### Geänderte Patentansprüche gemäss Regel 137(2) EPÜ.

**1.** Vorrichtung (1) zur Nutzung des Raums (9) in einer zwischen einem vorderen Fahrgastraum (3) und einem hinteren Laderaum (4) angeordneten Fahrzeugwand (2), wobei der Raum (9) durch eine kanalartige Durchgangsöffnung (6) gebildet ist, die vorne von einer schwenkbaren Fahrgastraumklappe (7) oder Armlehne und hinten von einer schwenkbaren Laderaumklappe (8) verschließbar ist und dabei Gegenstände aufnehmen kann, wobei vor der Laderaumklappe (8) zumindest eine Zwischenwand (10; 10') angeordnet ist, die schwenkbar an der Fahrzeugwand (2) befestigt ist und beim Verschwenken den übrigen lichten Querschnitt der Durchgangsöffnung (6) freigibt, **dadurch gekennzeichnet, dass** die Zwischenwand (10; 10') den unteren Bereich des lichten Querschnitts der Durchgangsöffnung (6) bis in einer Höhe von einem Drittel bis zu zwei Dritteln abdeckt.

**2.** Vorrichtung nach Anspruch 1, **dadurch gekennzeichnet, dass** die Zwischenwand (10') nahe oder an der Laderaumklappe (8) befestigt und zusammen mit oder parallel zu dieser schwenkbar befestigt ist.

**3.** Vorrichtung nach Anspruch 1, **dadurch gekennzeichnet, dass** die Zwischenwand (10) als separates und parallel zu der Fahrgastraumklappe (7) schwenkbares Teil ausgebildet ist.

**4.** Vorrichtung nach einem der Ansprüche 1 bis 3, **dadurch gekennzeichnet, dass** die Zwischenwand (10) zumindest zum Teil dehnbar ausgebildet ist.

**5.** Vorrichtung nach einem der Ansprüche 1 bis 4, **dadurch gekennzeichnet, dass** die Zwischenwand (10) einen biegesteifen Tragrahmen (14) umfasst, der über Gelenke (16) am oder im Boden (11) der Durchgangsöffnung (6) schwenkbar gelagert und über von Hand lösbare Befestigungsmittel (18) in einer der Neigung der Fahrzeugwand (2) entsprechenden Stellung seitlich der Durchgangsöffnung (6) befestigbar ist.

**6.** Vorrichtung nach Anspruch 5, **dadurch gekennzeichnet, dass** der Tragrahmen (14) aus einem spritzgegossenen Kunststoffteil besteht.

**7.** Vorrichtung nach Anspruch 5 oder 6, **dadurch gekennzeichnet, dass** an dem Tragrahmen (14) ein flexibles und / oder dehnbares flächiges Glied (19) befestigt ist, das den überwiegenden Teil der Zwischenwand (10) bildet.

**8.** Vorrichtung nach Anspruch 7, **dadurch gekennzeichnet, dass** der Tragrahmen (14) eine U-Form aufweist, deren Steg (15) zur schwenkbaren Befestigung und deren beide Schenkel (17) zur von Hand lösbaren Befestigung an der Fahrzeugwand (2) dienen.

**9.** Vorrichtung nach Anspruch 8, **dadurch gekennzeichnet, dass** die lösbare Befestigung als elastische Klipse (18) ausgebildet ist.

**10.** Vorrichtung nach einem der Ansprüche 1 bis 9, **dadurch gekennzeichnet, dass** die Zwischenwand (10; 10') zumindest überwiegend aus Stoff, Folie oder Netz besteht.
